# EUROPEAN PATENT APPLICATION

(11) **EP 4 825 771 A1**
(43) Date of publication of application: **21.10.2026**
(21) Application number: 24914834.7
(22) Date of filing: 20.08.2024
(51) Int. Cl.: B65G 60/00

(54) **FEEDING METHOD, FEEDING SYSTEM AND BATTERY PRODUCTION LINE**

(30) Priority: 04.01.2024 CN 202410015155
(71) Applicant: Contemporary Amperex Technology Co., Limited, Ningde, Fujian 352100 (CN)
(72) Inventor: FANG, Yansong, Ningde, Fujian 352100 (CN); GAO, Congying, Ningde, Fujian 352100 (CN)
(74) Representative: Ziebig Hengelhaupt Intellectual Property Attorneys Patentanwaltskanzlei PartGmbB
(86) International application number: PCT/CN2024/113391
(87) International publication number: WO 2025/145612

(57) **Abstract**

The present application provides a feeding method, a feeding system and a battery production line. The method comprises: controlling a first transport vehicle and a second transport vehicle to transport first raw materials and second raw materials to a first docking position and a second docking position, respectively; controlling a third transport vehicle to reach a third docking position; controlling a driving assembly to transfer first material carrying trays carrying the first raw materials on the first transport vehicle to a pick-up position; controlling a manipulator to transfer the first raw materials at the pick-up position to a placement position until the first material carrying trays become first empty trays; controlling the driving assembly to transfer the first empty trays onto the third transport vehicle; then, controlling the driving assembly to transfer the second raw materials to the pick-up position; controlling the manipulator to transfer the second raw materials at the pick-up position to the placement position until second material carrying trays become second empty trays; and controlling the driving assembly to transfer the second empty trays onto the first transport vehicle. In this way, the driving assembly can be controlled to reach any docking position, and each transport vehicle can carry raw materials and can also carry empty trays.

## Description

### CROSS-REFERENCE TO RELATED APPLICATIONS

The present application claims priority to Chinese Patent Application No. 2024100151556, filed on January 04, 2024, which is incorporated herein by reference in its entirety.

### TECHNICAL FIELD

The present invention relates to the field of battery technologies, and in particular, to a feeding method, a feeding system, and a battery production line.

### BACKGROUND

Batteries have been widely applied to the field of new energy, for example, in electric automobiles, new energy automobiles, and the like. New energy automobiles and electric automobiles have become a new trend of development in the automotive industry. A battery production process usually involves workpiece feeding, and workpiece feeding efficiency has a significant impact on battery production efficiency. However, current feeding efficiency is low.

### SUMMARY

The present application provides a feeding method, a feeding system, and a battery production line, to solve the problem of low feeding efficiency in the related technology.

To solve the foregoing technical problem, one technical solution employed in the present application is to provide a feeding method, applied to an automatic feeding system. The feeding method includes:
controlling a first transport vehicle to transport first material carrying trays carrying first raw materials to a first docking position;
controlling a second transport vehicle to transport second material carrying trays carrying second raw materials to a second docking position;
controlling a third transport vehicle to reach a third docking position, where the third transport vehicle is an empty vehicle;
controlling a driving assembly to transfer the first material carrying trays carrying the first raw materials on the first transport vehicle one by one to a material pick-up position until the first transport vehicle becomes an empty vehicle;
controlling a manipulator to transfer the first raw materials at the material pick-up position one by one from the first material carrying trays to a material placement position until the first material carrying trays become first empty trays;
controlling the driving assembly to transfer the first empty trays at the material pick-up position one by one onto the third transport vehicle until all the first material carrying trays on the first transport vehicle are transferred onto the third transport vehicle;
in response to the driving assembly transferring a last one of the first empty trays away from the material pick-up position, controlling the driving assembly to transfer the second material carrying trays carrying the second raw materials on the second transport vehicle one by one to the material pick-up position until the second transport vehicle becomes an empty vehicle;
controlling the manipulator to transfer the second raw materials at the material pick-up position one by one from the second material carrying trays to the material placement position until the second material carrying trays become second empty trays; and
controlling the driving assembly to transfer the second empty trays at the material pick-up position onto the first transport vehicle until all the second material carrying trays on the second transport vehicle are transferred onto the first transport vehicle.

With the foregoing feeding method, the driving assembly can be controlled to be movable back and forth between the material pick-up position, the first docking position, the second docking position, and the third docking position. The driving assembly can reach all the docking positions, eliminating the need to configure one driving assembly to transfer raw materials and empty trays at each docking position, thereby reducing the number of assemblies. Moreover, with the method, the driving assembly is controlled to transfer the second empty trays at the material pick-up position onto the first transport vehicle, so that empty trays can also be placed onto the first transport vehicle configured to carry the raw materials. As such, when the third transport vehicle is fully loaded with empty trays so that the third transport vehicle needs to be replaced, the manipulator can continue to transfer the raw materials on the second transport vehicle, without halting and waiting until replacement of the third transport vehicle is completed, thereby speeding up feeding.

In an embodiment, in response to all the first material carrying trays on the first transport vehicle being transferred onto the third transport vehicle, the third transport vehicle is controlled to transport the first empty trays away from the third docking position, and to transport third material carrying trays carrying third raw materials to the third docking position before the driving assembly transfers a last one of the second empty trays away from the material pick-up position.

With the foregoing solution, the third transport vehicle can carry the first empty trays and transport the first empty trays away from the third docking position, and can also carry the third raw materials and transport the third raw materials to the third docking position, enriching functionality of the third transport vehicle, thereby making an entire feeding process faster. Moreover, the driving assembly can further transfer the third raw materials from the third transport vehicle to the material pick-up position, to replenish raw materials at the material pick-up position in time. This ensures that the manipulator can continuously perform feeding, increasing a feeding speed, and thereby improving pieces per minute (PPM) of a feeding system.

In an embodiment, in response to the driving assembly transferring the last second empty tray away from the material pick-up position, the driving assembly is controlled to transfer the third material carrying trays carrying the third raw materials on the third transport vehicle one by one to the material pick-up position until the third transport vehicle becomes an empty vehicle. The manipulator is controlled to transfer the third raw materials at the material pick-up position one by one from the third material carrying trays to the material placement position until the third material carrying trays become third empty trays. The driving assembly is controlled to transfer the third empty trays at the material pick-up position onto the second transport vehicle until all the third material carrying trays on the third transport vehicle are transferred onto the second transport vehicle.

With the foregoing solution, after the last second empty tray is transferred away, the driving assembly is controlled to further transfer the third material carrying trays carried on the third transport vehicle to the material pick-up position, and the manipulator is controlled to continuously transfer the third raw materials at the material pick-up position to the material placement position, to ensure that the manipulator continuously performs feeding, thereby increasing the feeding speed. Moreover, the driving assembly is controlled to transfer the third empty trays onto the second transport vehicle, so that the second transport vehicle can transport the second raw materials and can also transport empty trays, enriching functionality of the second transport vehicle.

In an embodiment, in response to all the second material carrying trays on the second transport vehicle being transferred onto the first transport vehicle, the first transport vehicle is controlled to transport the second empty trays away from the first docking position, and to transport the first material carrying trays carrying the first raw materials to the first docking position again before the driving assembly transfers a last one of the third empty trays away from the material pick-up position.

With the foregoing solution, after transporting away the second empty trays, the first transport vehicle transports the first material carrying trays carrying the first raw materials to the first docking position again before the driving assembly transfers the last third empty tray away from the material pick-up position, to replenish raw materials in time. This ensures that after feeding of the third raw materials is completed, the driving assembly can further transfer the first raw materials from the first docking position to the material pick-up position, and the manipulator can continue to transfer the first raw materials at the material pick-up position to the material placement position, thereby ensuring that the entire feeding process is continuously performed. As such, a case in which there is no raw material at all the three docking positions is avoided, effectively ensuring the feeding speed.

In an embodiment, in response to the driving assembly transferring the last third empty tray away from the material pick-up position, the driving assembly is controlled to transfer the first material carrying trays carrying the first raw materials on the first transport vehicle one by one to the material pick-up position until the first transport vehicle becomes an empty vehicle. The manipulator is controlled to transfer the first raw materials at the material pick-up position one by one from the first material carrying trays to the material placement position until the first material carrying trays become first empty trays. The driving assembly is controlled to transfer the first empty trays at the material pick-up position one by one onto the third transport vehicle until all the first material carrying trays on the first transport vehicle are transferred onto the third transport vehicle. And in response to all the third material carrying trays on the third transport vehicle being transferred onto the second transport vehicle, the second transport vehicle is controlled to transport the third empty trays away from the second docking position, and to transport the second material carrying trays carrying the second raw materials to the second docking position again before the driving assembly transfers a last one of the first empty trays away from the material pick-up position.

With the foregoing solution, after feeding of the third raw materials is completed, the driving assembly can be controlled to transfer the first raw materials from the first transport vehicle, to ensure that the manipulator can continuously perform feeding. The second transport vehicle can also be controlled at the same time to remove the third empty trays. Before feeding of the first raw materials is completed, the second transport vehicle is further controlled to transport the second material carrying trays carrying the second raw materials to the second docking position, so that after the feeding of the first raw materials is completed, the driving assembly can continue to transfer the second raw materials from the second transport vehicle. Moreover, the first empty trays can be transferred onto the third transport vehicle for transport.

In an embodiment, the step of controlling the second transport vehicle to transport the second material carrying trays carrying the second raw materials to the second docking position includes: controlling the second transport vehicle to reach the second docking position before the driving assembly transfers the last first empty tray away from the material pick-up position.

The foregoing solution can ensure that after the feeding of the first raw materials is completed, the driving assembly can transfer the second raw materials from the second transport vehicle at the second docking position to the material pick-up position, to ensure normal feeding by the manipulator. This avoids a case in which the driving assembly needs to wait until the second transport vehicle carrying the second raw materials reaches the second docking position, thereby effectively ensuring the feeding speed.

In order to solve the foregoing technical problem, another technical solution employed in the present application is to provide a feeding system. The feeding system includes a feeding apparatus, a transport apparatus, and a control circuit. The feeding apparatus includes a driving assembly, a transmission assembly, and a manipulator. The feeding apparatus has a first docking position, a second docking position, a third docking position, a material pick-up position, and a material placement position. The transmission assembly passes through the material placement position and is configured to bring a raw material away from the material placement position. The transport apparatus includes a first transport vehicle, a second transport vehicle, and a third transport vehicle. The control circuit is electrically connected to each of the feeding apparatus and the transport apparatus. The control circuit is configured to control operation of the feeding system in accordance with the feeding method involved above.

With the foregoing solution, the driving assembly can move back and forth between the material pick-up position, the first docking position, the second docking position, and the third docking position. That is, the driving assembly can reach all the docking positions, eliminating the need to configure one driving assembly at each docking position, thereby reducing the number of assemblies in the entire feeding system. Moreover, the first transport vehicle, the second transport vehicle, and the third transport vehicle of the feeding system can be configured to transport raw materials to corresponding docking positions, and can also be configured to remove empty trays. As such, when a transport vehicle at one of the docking positions is to remove empty trays so that the transport vehicle needs to be replaced, the driving assembly can place the empty trays onto a transport vehicle at another docking position, without waiting until the transport vehicle that needs to be removed returns, thereby speeding up feeding.

In an embodiment, the first transport vehicle, the second transport vehicle, and the third transport vehicle have the same carrying capacity. The first docking position, the second docking position, and the third docking position are disposed on a same side of the transmission assembly. The third docking position is disposed between the first docking position and the second docking position in a transmission direction of the transmission assembly. The material pick-up position is disposed above the third docking position.

With the foregoing solution, by disposing the first docking position, the second docking position, and the third docking position on the same side of the transmission assembly, interference between a process of the transmission assembly bringing raw materials away from the material placement position and a process of the driving assembly and the manipulator transferring raw materials can be avoided. Moreover, in the transmission direction of the transmission assembly, by disposing the third docking position between the first docking position and the second docking position and disposing the material pick-up position above the third docking position, movement paths for the driving assembly transferring the first raw materials and the second raw materials can be substantially the same. This can reduce a stroke of the driving assembly for transferring the first raw materials or the second raw materials, thereby speeding up feeding.

In an embodiment, the driving assembly includes: a first lifting mechanism, which is disposed as corresponding to the first docking position and configured to lift the first material carrying trays carrying the first raw materials on the first transport vehicle one by one to a first preset position, and place the second empty trays at the first preset position one by one onto the empty first transport vehicle; a second lifting mechanism, which is disposed as corresponding to the second docking position and configured to lift the second material carrying trays carrying the second raw materials on the second transport vehicle one by one to a second preset position, and place the third empty trays at the second preset position one by one onto the empty second transport vehicle, where the material pick-up position is disposed between the first preset position and the second preset position in the transmission direction of the transmission assembly; a third lifting mechanism, which is disposed as corresponding to the third docking position and configured to lift the third material carrying trays carrying the third raw materials on the third transport vehicle one by one to the material pick-up position, and place the first empty trays at the material pick-up position one by one onto the empty third transport vehicle; and a translation mechanism, which is disposed above the first docking position, the second docking position, and the third docking position and capable of moving to any one of the first preset position, the material pick-up position, and the second preset position in the transmission direction of the transmission assembly, where the translation mechanism is configured to move the first material carrying trays carrying the first raw materials at the first preset position to the material pick-up position, move the second material carrying trays carrying the second raw materials at the second preset position to the material pick-up position, move the second empty trays at the material pick-up position to the first preset position, and move the third empty trays at the material pick-up position to the second preset position.

With the foregoing solution, the material carrying trays at a corresponding position can be lifted one by one to a preset positions using the lifting mechanism. Using the translation mechanism, the material carrying trays carrying raw materials at the preset position can be transferred to the material pick-up position, and the empty trays at the material pick-up position can be transferred to one of the preset positions. In addition, the empty trays can be placed onto an empty transport vehicle using the lifting mechanism at a corresponding position. As such, feeding of raw materials and removal of empty trays are implemented. Moreover, the translation mechanism can move to any one of the first preset position, the material pick-up position, and the second preset position, so that the translation mechanism can transfer all the raw materials at any one of the positions to the material pick-up position, and move the empty trays at the material pick-up position to an empty vehicle at any position, thereby reducing the number of translation mechanisms.

In order to solve the foregoing technical problem, still another technical solution employed in the present application is to provide a battery production line. The battery production line includes a case-put-in system and the feeding system involved above. The case-put-in system is configured to put a cell into a case. The feeding system is configured to transmit the case to the case-put-in system.

The driving assembly of the feeding system of the foregoing battery production line can move back and forth between the material pick-up position, the first docking position, the second docking position, and the third docking position. That is, the driving assembly can reach all the docking positions, eliminating the need to configure one driving assembly at each docking position, thereby reducing the number of assemblies in the entire feeding system. Moreover, the first transport vehicle, the second transport vehicle, and the third transport vehicle of the feeding system can be configured to transport raw materials to corresponding docking positions, and can also be configured to remove empty trays. As such, when a transport vehicle at one of the docking positions is to remove empty trays so that the transport vehicle needs to be replaced, the driving assembly can place the empty trays onto a transport vehicle at another docking position, without waiting until the transport vehicle that needs to be removed returns, speeding up feeding, and thereby speeding up case-put-in of the cell.

The above description is merely an overview of the technical solutions of the present application. To understand the technical means of the present application more clearly, it can be implemented according to the content of the specification. To make the foregoing and other objectives, features and advantages of the present application more apparent, the specific implementations of the present application are listed below.

### BRIEF DESCRIPTION OF THE DRAWINGS

Various other advantages and benefits will become clear to a person of ordinary skill in the art by reading the following detailed description of exemplary implementations. The accompanying drawings are merely used for illustrating the preferred implementations and are not intended to constitute a limitation on the present application. Moreover, the same reference numerals are used to denote the same components throughout the drawings. In the accompanying drawings:
FIG. 1 is a schematic flowchart of a feeding method according to an embodiment of the present application;
FIG. 2 is a simplified top view of a feeding system according to an embodiment of the present application; and
FIG. 3 is a simplified side view of a feeding system according to an embodiment of the present application.

### Descriptions of reference numerals:

A - material pick-up position; B - material placement position; 2 - manipulator; 21 - first transport vehicle; 22 - second transport vehicle; 23 - third transport vehicle; 31 - first lifting mechanism; 32 - second lifting mechanism; 33 - third lifting mechanism; 4 - transmission assembly; 5 - translation mechanism; 51 - translation driving servo; 52 - driving rod; 53 - clamping assembly; 6 - detection mechanism; 7 - support.

### DETAILED DESCRIPTION

Embodiments of the technical solutions of the present application will be described in detail below with reference to the accompanying drawings. The following embodiments are used only to describe the technical solutions of the present application more explicitly, and therefore are interpreted only as examples, rather than as limitations on the protection scope of the present application.

Unless otherwise defined, all technical and scientific terms used herein have the same meaning as commonly understood by those skilled in the technical field to which the present application relates. The terminology used herein is for the purpose of describing particular embodiments only and is not intended to limit the present application. The terms "including" and "having" and any variations thereof in the description and claims of the present application and the foregoing description of the accompanying drawings are intended to cover non-exclusive inclusions.

In the description of the embodiments of the present application, the technical terms "first", "second", and the like are intended only to distinguish different objects, and should not be understood as indicating or implying relative importance or implying the number, specific order, or primary and secondary relationship of indicated technical features. In the description of the embodiments of the present application, "a plurality of" means two or more, unless otherwise expressly and specifically defined.

Reference to "embodiment" herein means that particular features, structures, or characteristics described with reference to the embodiment may be included in at least one embodiment of the present application. The term appearing at different positions in this specification may not refer to the same embodiment or an independent or alternative embodiment that is mutually exclusive with another embodiment. A person skilled in the art explicitly or implicitly understands that the embodiments described herein may be combined with other embodiments.

In the description of the present application, the term "and/or" is merely an association to describe the associated objects. It can mean that there are three kinds of relationships, such as A and/or B, which means that A exists alone, A and B exist at the same time, and B exists alone. In addition, the character "/" herein generally indicates an "or" relationship between the associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, the orientations or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential" are based on the orientations or positional relationships shown in the accompanying drawings, and are only for the convenience of describing the present application and simplifying the description, rather than indicating or implying that the involved device or element should have a specific orientation or should be configured or operated in the specific orientation, and therefore cannot be understood as limitations on the embodiments of the present application.

In the description of the embodiments of the present application, unless otherwise explicitly specified and defined, the technical terms "mounted", "connected", "connect", "fixed", and the like should be understood in a broad sense. For example, a connection may refer to a fixed connection, a detachable connection, or an integral connection; a mechanical connection or an electrical connection; a direct connection, an indirect connection via an intermediate medium, internal communication between two elements, or an interaction between two elements. For a person of ordinary skill in the art, the specific meanings of the above terms in the embodiments of the present application may be interpreted according to the specific situations.

Currently, a common feeding manner typically involves manually pushing a material basket carrying workpieces to a pick-up position using a vehicle, grabbing the workpieces from the pick-up position with a manipulator, and then recovering an empty material basket from a discharging position using an empty vehicle. Such manner requires manual feeding and discharging to be frequently performed, resulting in low feeding efficiency.

In related technologies, a fully automatic feeding method is also employed, where a vehicle is controlled to automatically push a material basket carrying workpieces to a pick-up position, a manipulator grabs the workpieces from the pick-up position, then an empty material basket is placed onto an empty vehicle through a driving assembly, and after the empty vehicle is fully loaded with empty material baskets, the empty material baskets are transported away.

The inventor of the present application has designed a feeding system, including a first transport vehicle, a second transport vehicle, an empty vehicle located between the first transport vehicle and the second transport vehicle, a first traversing mechanism, a second traversing mechanism, and a manipulator. The first transport vehicle is configured to transport first material carrying trays carrying first raw materials to a first docking position. The first traversing mechanism can move between a material pick-up position and the first docking position, to transfer the first raw materials to the material pick-up position. The second transport vehicle is configured to transport the first material carrying trays carrying second raw materials to a second docking position. The second traversing mechanism can move between the material pick-up position and the second docking position, to transfer the second raw materials to the material pick-up position. An empty vehicle is located at a third docking position. The manipulator picks up raw materials from the material carrying trays at the material pick-up position, and places the raw materials to a material placement position. An empty tray at the material pick-up position is placed onto the empty vehicle. After the manipulator places all the first raw materials (or the second raw materials) to the material placement position, the empty vehicle is fully loaded with empty trays. In this case, the empty vehicle needs to be replaced. The manipulator halts and waits. After the empty vehicle returns to the third docking position again, that is, after replacement of the empty vehicle is completed, the manipulator is reset and continues to pick up the second raw materials (or the first raw materials).

However, upon long-term research, the inventor of the present application has found that: in the foregoing solution, during the replacement of the empty vehicle, the manipulator needs to stop feeding and wait until the replacement of the empty vehicle is completed, thereby affecting a feeding speed. Moreover, the first traversing mechanism as well as the second traversing mechanism can only move between a corresponding docking position and the material pick-up position, but cannot move to all the docking positions. The traversing mechanisms have short strokes. The traversing mechanisms are of a large quantity, and lack diversity in functionality. In addition, only raw materials can be placed on the first transport vehicle and the second transport vehicle, while empty trays cannot be placed thereon; and only empty trays can be placed on the empty vehicle, while raw materials cannot be placed thereon.

On that basis, embodiments of the present application provide a feeding system, in which a driving assembly can reach all docking positions, and according to a program setting, raw materials as well as empty trays can be placed on a plurality of transport vehicles. During replacement of a transport vehicle fully loaded with empty trays, a manipulator does not need to halt and wait, resulting in a fast feeding speed.

The following describes the present application in detail with reference to the accompanying drawings and embodiments.

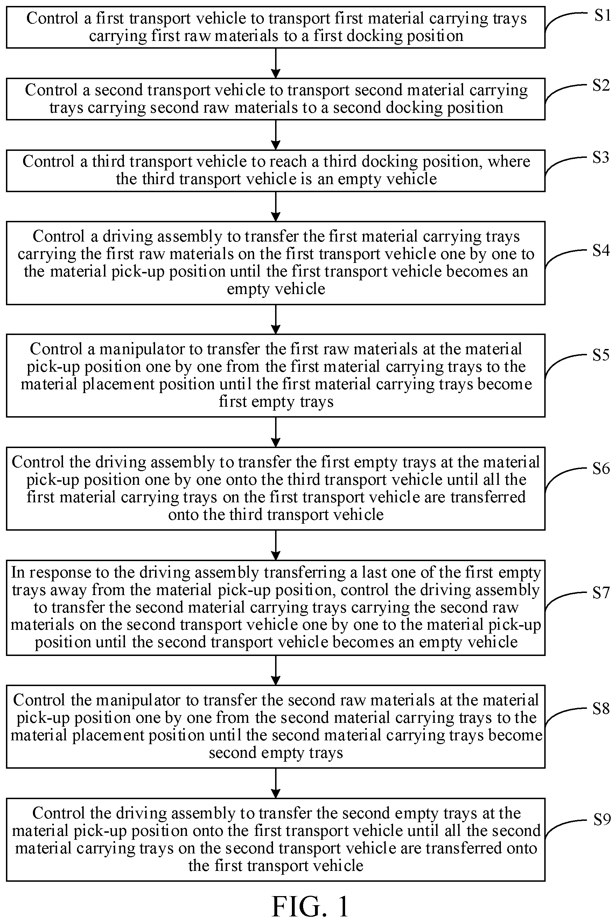

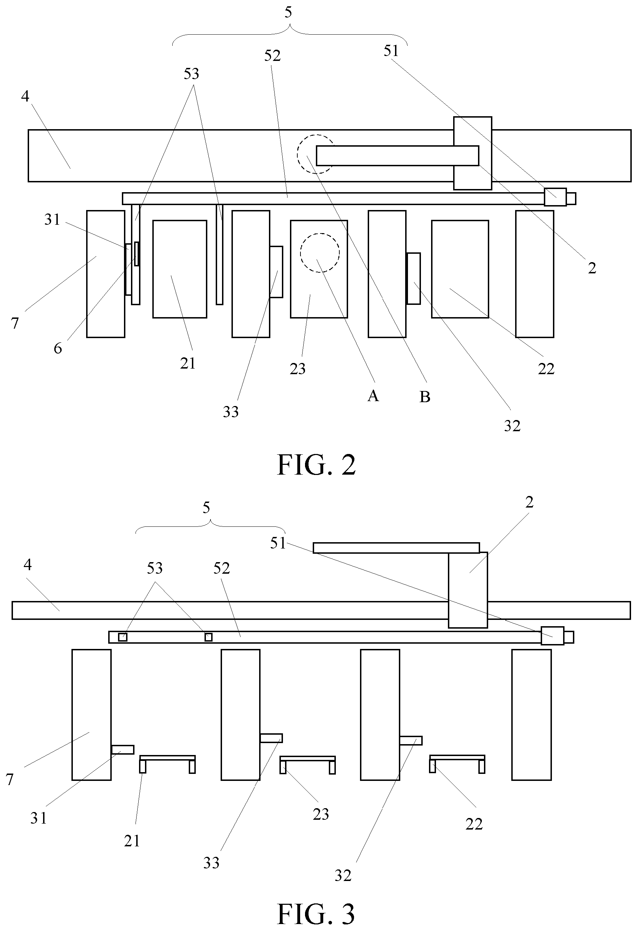

Referring to FIGS. 1-3, FIG. 1 is a schematic flowchart of a feeding method according to an embodiment of the present application; FIG. 2 is a simplified top view of a feeding system according to an embodiment of the present application; and FIG. 3 is a simplified side view of a feeding system according to an embodiment of the present application. In this embodiment, a feeding method is provided and applied to an automatic feeding system. The automatic feeding system includes a first docking position, a second docking position, a third docking position, a material pick-up position A, and a material placement position B. The feeding method includes the following steps:
Step S1: Control a first transport vehicle 21 to transport first material carrying trays carrying first raw materials to the first docking position.
Step S2: Control a second transport vehicle 22 to transport second material carrying trays carrying second raw materials to the second docking position.
Step S3: Control a third transport vehicle 23 to reach the third docking position, where the third transport vehicle 23 is an empty vehicle.
Step S4: Control a driving assembly to transfer the first material carrying trays carrying the first raw materials on the first transport vehicle 21 one by one to the material pick-up position A until the first transport vehicle 21 becomes an empty vehicle.
Step S5: Control a manipulator 2 to transfer the first raw materials at the material pick-up position A one by one from the first material carrying trays to the material placement position B until the first material carrying trays become first empty trays.
Step S6: Control the driving assembly to transfer the first empty trays at the material pick-up position A one by one onto the third transport vehicle 23 until all the first material carrying trays on the first transport vehicle 21 are transferred onto the third transport vehicle 23.
Step S7: In response to the driving assembly transferring a last one of the first empty trays away from the material pick-up position A, control the driving assembly to transfer the second material carrying trays carrying the second raw materials on the second transport vehicle 22 one by one to the material pick-up position A until the second transport vehicle 22 becomes an empty vehicle.
Step S8: Control the manipulator 2 to transfer the second raw materials at the material pick-up position A one by one from the second material carrying trays to the material placement position B until the second material carrying trays become second empty trays.
Step S9: Control the driving assembly to transfer the second empty trays at the material pick-up position A onto the first transport vehicle 21 until all the second material carrying trays on the second transport vehicle 22 are transferred onto the first transport vehicle 21.

The first transport vehicle 21, the second transport vehicle 22, and the third transport vehicle 23 may be any vehicle having a wheel, for example, a common trolley or a workshop material vehicle. In some implementations, the first transport vehicle 21, the second transport vehicle 22, and the third transport vehicle 23 may employ an automated guided vehicle (AGV) to convey raw materials. Traveling of the AGV may be guided by means of an electromagnetic or optical guidance apparatus or other guidance apparatuses disposed on the AGV, so that the AGV can travel along a specified path. Quantities of raw materials carried on the first transport vehicle 21, the second transport vehicle 22, and the third transport vehicle 23 may be the same or may be different. In addition, each of the first transport vehicle 21, the second transport vehicle 22, and the third transport vehicle 23 may be either fully loaded or not fully loaded with raw materials or empty trays each time. In the present application, preferably, the transport vehicle is fully loaded with raw materials or empty trays each time, to increase carrying efficiency of the transport vehicle. An empty vehicle refers to a transport vehicle that carries no raw material or material carrying tray. An empty tray refers to a material carrying tray that carries no raw material.

In an embodiment, the first transport vehicle 21, the second transport vehicle 22, and the third transport vehicle 23 have the same carrying capacity and are fully loaded each time. As such, all the first material carrying trays on the first transport vehicle 21 are transferred onto the third transport vehicle 23, and the third transport vehicle 23 is fully loaded with the first empty trays.

The first docking position, the second docking position, and the third docking position are three particular regional positions where transport vehicles can be placed in the feeding system. In an embodiment, the first docking position, the second docking position, and the third docking position are sequentially arranged with the second docking position located in the middle. The first raw material, the second raw material, and the third raw material may be aluminum cases, end covers, and the like. The first material carrying tray, the second material carrying tray, and the third material carrying tray each may be any structure that can carry a material, for example, an aluminum tray, a pallet, an object container, and the like. Each material carrying tray may accommodate only one raw material, or may accommodate a stack of materials or a plurality of materials arranged in array.

The material pick-up position A refers to a position where the manipulator 2 picks up a raw material. The material placement position B refers to a position where the raw material picked up by the manipulator 2 from the material pick-up position A is finally placed. The material pick-up position A and the material placement position B may be specifically defined according to regions where they are located in a space. For example, a region M is specified as the material pick-up position A, a region N is specified as the material placement position B. There may be a spacing between the region M and the region N. The driving assembly and the manipulator 2 may each include a driving member, a clamping member, an adsorption member, or the like, to pick up and transfer a raw material. In an embodiment, the material placement position B is a region on a transmission assembly 4, so that a raw material at the material placement position B is transmitted by the transmission assembly 4 to another station. The material pick-up position A may be a region above any one of the first docking position, the second docking position, and the third docking position. In an embodiment, the material pick-up position A is a region above the second docking position.

The "one-by-one transferring" involved in the present application may be one-material-by-one-material transferring, or may be one-group-by-one-group transferring with each group composed of a plurality of materials. For example, the driving assembly transferring the first material carrying trays carrying the first raw materials on the first transport vehicle 21 one by one to the material pick-up position A may be the driving assembly transferring a plurality of first material carrying trays on the first transport vehicle 21 one by one to the material pick-up position A. The manipulator 2 may transfer the first raw materials at the material pick-up position A one by one to the material placement position B. The driving assembly may further transfer the first empty trays at the material pick-up position A one by one to a corresponding empty vehicle. Alternatively, the first material carrying trays on the first transport vehicle 21 are placed in a plurality of layers. When a plurality of first material carrying trays are placed in each layer, the driving assembly may alternatively transfer all the first material carrying trays in one layer to the material pick-up position A each time. The manipulator 2 transfers all the first raw materials placed to the material pick-up position A to the material placement position B each time. The driving assembly further transfers all the first empty trays at the material pick-up position A to a corresponding empty vehicle each time. Still alternatively, the first material carrying trays on the first transport vehicle 21 are placed in a plurality of layers. When a plurality of first material carrying trays are placed in each layer, the driving assembly may alternatively transfer one first material carrying tray to the material pick-up position A each time according to the order of the layers. The manipulator 2 transfers all the first raw materials placed to the material pick-up position A to the material placement position B each time. The driving assembly further transfers all the first empty trays at the material pick-up position A to a corresponding empty vehicle each time.

With the foregoing method, the driving assembly can be controlled to move back and forth between the material pick-up position A, the first docking position, the second docking position, and the third docking position. The driving assembly can reach all the docking positions, eliminating the need to configure one driving assembly to transfer raw materials and empty trays at each docking position, thereby reducing the number of assemblies. Moreover, with the method, the driving assembly is controlled to transfer the second empty trays at the material pick-up position A onto the first transport vehicle 21, so that empty trays can also be placed onto the first transport vehicle 21 configured to carry the raw materials. As such, when the third transport vehicle 23 is fully loaded with empty trays so that the third transport vehicle 23 needs to be replaced, the manipulator can continue to transfer the raw materials on the second transport vehicle 22, without halting and waiting until replacement of the third transport vehicle 23 is completed, thereby speeding up feeding. In an embodiment, in response to all the first material carrying trays on the first transport vehicle 21 being transferred onto the third transport vehicle 23, the third transport vehicle 23 is controlled to transport the first empty trays away from the third docking position, and to transport third material carrying trays carrying third raw materials to the third docking position before the driving assembly transfers a last one of the second empty trays away from the material pick-up position A. As such, after the driving assembly transfers the last second empty tray from the material pick-up position A onto the first transport vehicle 21, the manipulator 2 can immediately transfer the third raw materials on the third transport vehicle 23 without waiting.

The third transport vehicle 23 that transports the third material carrying trays carrying the third raw materials to the third docking position may be a third transport vehicle 23 the same as the third transport vehicle 23 that transports the first empty trays away from the third docking position. That is, after transporting the first empty trays away from the third docking position and being unloaded, the third transport vehicle 23 carries third raw materials again and transports the third raw materials to the third docking position. As such, the number of transport vehicles required in the feeding system can be reduced, thereby saving costs.

Certainly, in other implementations, the third transport vehicle 23 that transports the third material carrying trays carrying the third raw materials to the third docking position and the third transport vehicle 23 that transports the first empty trays away from the third docking position may alternatively two different transport vehicles. In this implementation, after the third transport vehicle 23 moves away from the third docking position, a next third transport vehicle 23 may be controlled to transport third material carrying trays carrying third raw materials to the third docking position. This can effectively ensure that the third raw materials can be transported from the third transport vehicle 23 after the driving assembly transfers the last second empty tray away from the material pick-up position A. Certainly, alternatively, after preset time after the third transport vehicle 23 moves away from the third docking position, a next third transport vehicle 23 may be controlled to transport third material carrying trays carrying third raw materials to the third docking position, to reserve time for cleaning, repairing, maintaining, and the like of the third docking position. The preset time may be set according to an actual situation, provided that it is ensured that the third material carrying trays carrying the third raw materials are transported to the third docking position before the driving assembly transfers the last second empty tray away from the material pick-up position A.

With the foregoing solution, the third transport vehicle 23 can carry the first empty trays and transport the first empty trays away from the third docking position, and can also carry the third raw materials and transport the third raw materials to the third docking position, enriching functionality of the third transport vehicle 23, thereby making an entire feeding process faster. Moreover, the driving assembly can further transfer the third raw materials from the third transport vehicle 23 to the material pick-up position A, to replenish raw materials at the material pick-up position A in time. This ensures that the manipulator 2 can continuously perform feeding, increasing a feeding speed, and thereby improving pieces per minute (PPM) of a feeding system.

In an embodiment, in response to the driving assembly transferring the last second empty tray away from the material pick-up position A, the driving assembly is controlled to transfer the third material carrying trays carrying the third raw materials on the third transport vehicle 23 one by one to the material pick-up position A until the third transport vehicle 23 becomes an empty vehicle. The manipulator 2 is controlled to transfer the third raw materials at the material pick-up position A one by one from the third material carrying trays to the material placement position B until the third material carrying trays become third empty trays. The driving assembly is controlled to transfer the third empty trays at the material pick-up position A onto the second transport vehicle 22 until all the third material carrying trays on the third transport vehicle 23 are transferred onto the second transport vehicle 22. As such, the manipulator 2 does not need to wait.

The driving assembly may operate in coordination with the manipulator 2. The driving assembly transfers one third raw material or one group of third raw materials to the material pick-up position A each time. Then the manipulator 2 transfers the third raw material or the group of third raw materials to the material placement position B. In this case, the driving assembly transfers the corresponding third empty trays onto the second transport vehicle 22. Then, the driving assembly moves to the third docking position, picks up a next third raw material or a next group of third raw materials again, and transfers the next third raw material or the next group of third raw materials to the material pick-up position A. The manipulator 2 continues to transfer the third raw material or the group of third raw materials to the material placement position B. In this case, the driving assembly continues to transfer a corresponding third empty tray onto the second transport vehicle 22, and then returns to the third docking position... The above process is performed repeatedly until all the third material carrying trays on the third transport vehicle 23 are transferred onto the second transport vehicle 22.

With the foregoing solution, after the last second empty tray is transferred away, the driving assembly is controlled to further transfer the third material carrying trays carried on the third transport vehicle 23 to the material pick-up position A, and the manipulator 2 is controlled to continuously transfer the third raw materials at the material pick-up position A to the material placement position B, to ensure that the manipulator 2 continuously performs feeding, thereby increasing the feeding speed. Moreover, the driving assembly is controlled to transfer the third empty trays onto the second transport vehicle 22, so that the second transport vehicle 22 can transport the second raw materials and can also transport empty trays, enriching functionality of the second transport vehicle 22.

In an embodiment, in response to all the second material carrying trays on the second transport vehicle 22 being transferred onto the first transport vehicle 21, the first transport vehicle 21 is controlled to transport the second empty trays away from the first docking position, and to transport the first material carrying trays carrying the first raw materials to the first docking position again before the driving assembly transfers a last one of the third empty trays away from the material pick-up position A.

The first transport vehicle 21 that transports the first material carrying trays carrying the first raw materials to the first docking position and the first transport vehicle 21 that transports the second empty trays away from the first docking positions may be the same transport vehicle or two different transport vehicles. A specific transport manner is similar to the foregoing feeding manner of controlling the third transport vehicle 23 to transport the first empty trays away from the third docking position and to transport the third material carrying trays carrying the third raw materials to the third docking position before the driving assembly transfers the last second empty tray away from the material pick-up position A, and details are not described herein again.

With the foregoing solution, after transporting away the second empty trays, the first transport vehicle 21 transports the first material carrying trays carrying the first raw materials to the first docking position again before the driving assembly transfers the last third empty tray away from the material pick-up position A, to replenish raw materials in time. This ensures that after feeding of the third raw materials is completed, the driving assembly can further transfer the first raw materials from the first docking position to the material pick-up position A, and the manipulator 2 can continue to transfer the first raw materials at the material pick-up position A to the material placement position B, thereby ensuring that the entire feeding process is continuously performed. As such, a case in which there is no raw material at all the three docking positions is avoided, effectively ensuring the feeding speed. Moreover, the first transport vehicle 21 can carry the second empty trays and transport the second empty trays away from the first docking position, and can also carry the first raw materials and transport the first raw materials to the first docking position, enriching functionality of the first transport vehicle 21, thereby making the entire feeding process faster.

In an embodiment, in response to the driving assembly transferring the last third empty tray away from the material pick-up position A, the driving assembly is controlled to transfer the first material carrying trays carrying the first raw materials on the first transport vehicle 21 one by one to the material pick-up position A until the first transport vehicle 21 becomes an empty vehicle. The manipulator 2 is controlled to transfer the first raw materials at the material pick-up position A one by one from the first material carrying trays to the material placement position B until the first material carrying trays become first empty trays. The driving assembly is controlled to transfer the first empty trays at the material pick-up position A one by one onto the third transport vehicle 23 until all the first material carrying trays on the first transport vehicle 21 are transferred onto the third transport vehicle 23. And in response to all the third material carrying trays on the third transport vehicle 23 being transferred onto the second transport vehicle 22, the second transport vehicle 22 is controlled to transport the third empty trays away from the second docking position, and to transport the second material carrying trays carrying the second raw materials to the second docking position again before the driving assembly transfers a last one of the first empty trays away from the material pick-up position A.

The step of "in response to all the third material carrying trays on the third transport vehicle 23 being transferred onto the second transport vehicle 22, controlling the second transport vehicle 22 to transport the third empty trays away from the second docking position, and to transport the second material carrying trays carrying the second raw materials to the second docking position again before the driving assembly transfers a last one of the first empty trays away from the material pick-up position A" may be performed at the same time as the step of "in response to the driving assembly transferring the last third empty tray away from the material pick-up position A, controlling the driving assembly to transfer the first material carrying trays carrying the first raw materials on the first transport vehicle 21 one by one to the material pick-up position A until the first transport vehicle 21 becomes an empty vehicle; controlling the manipulator 2 to transfer the first raw materials at the material pick-up position A one by one from the first material carrying trays to the material placement position B until the first material carrying trays become first empty trays; controlling the driving assembly to transfer the first empty trays at the material pick-up position A one by one onto the third transport vehicle 23 until all the first material carrying trays on the first transport vehicle 21 are transferred onto the third transport vehicle 23", so as to improve the feeding efficiency.

The second transport vehicle 22 that transports the second material carrying trays carrying the second raw materials to the second docking position and the second transport vehicle 22 that transports the third empty trays away from the second docking positions may be the same transport vehicle or two different transport vehicles. A specific transport manner is similar to the foregoing feeding manner of controlling the third transport vehicle 23 to transport the first empty trays away from the third docking position and to transport the third material carrying trays carrying the third raw materials to the third docking position before the driving assembly transfers the last second empty tray away from the material pick-up position A, and details are not described herein again.

With the foregoing solution, after feeding of the third raw materials is completed, the driving assembly can be controlled to transfer the first raw materials from the first transport vehicle 21, to ensure that the manipulator 2 can continuously perform feeding. The second transport vehicle 22 can also be controlled at the same time to remove the third empty trays. Before feeding of the first raw materials is completed, the second transport vehicle 22 is further controlled to transport the second material carrying trays carrying the second raw materials to the second docking position, so that after the feeding of the first raw materials is completed, the driving assembly can continue to transfer the second raw materials from the second transport vehicle 22. Moreover, the first empty trays can be transferred onto the third transport vehicle 23 for transport.

In an embodiment, the step of controlling the second transport vehicle 22 to transport the second material carrying trays carrying the second raw materials to the second docking position includes: controlling the second transport vehicle 22 to reach the second docking position before the driving assembly transfers the last first empty tray away from the material pick-up position A.

The foregoing solution can ensure that after the feeding of the first raw materials is completed, the driving assembly can transfer the second raw materials from the second transport vehicle 22 at the second docking position to the material pick-up position A, to ensure normal feeding by the manipulator 2. This avoids a case in which the driving assembly needs to wait until the second transport vehicle 22 carrying the second raw materials reaches the second docking position, thereby effectively ensuring the feeding speed.

In an embodiment, referring to FIG. 2 to FIG. 3, FIG. 2 is a simplified top view of a feeding system according to an embodiment of the present application; and FIG. 3 is a simplified side view of a feeding system according to an embodiment of the present application. A feeding system is provided. The feeding system includes a feeding apparatus, a transport apparatus, and a control circuit (not shown). The feeding apparatus includes a driving assembly, a transmission assembly 4, and a manipulator 2. The feeding apparatus has a first docking position, a second docking position, a third docking position, a material pick-up position A, and a material placement position B. The transmission assembly 4 passes through the material placement position B and is configured to bring a raw material away from the material placement position B. The transport apparatus includes a first transport vehicle 21, a second transport vehicle 22, and a third transport vehicle 23. The control circuit is electrically connected to each of the feeding apparatus and the transport apparatus. The control circuit is configured to control operation of the feeding system in accordance with the feeding method provided in the above embodiment.

The feeding apparatus may further include a support 7. The support 7 defines a first spatial region, a second spatial region, and a third spatial region to serve as the first docking position, the second docking position, and the third docking position, respectively.

With the foregoing feeding system, the driving assembly can move back and forth between the material pick-up position A, the first docking position, the second docking position, and the third docking position. That is, the driving assembly can reach all the docking positions, eliminating the need to configure one driving assembly at each docking position, thereby reducing the number of assemblies in the entire feeding system. Moreover, the first transport vehicle 21, the second transport vehicle 22, and the third transport vehicle 23 of the feeding system can be configured to transport raw materials to corresponding docking positions, and can also be configured to remove empty trays. As such, when a transport vehicle at one of the docking positions is to remove empty trays so that the transport vehicle needs to be replaced, the driving assembly can place the empty trays onto a transport vehicle at another docking position, without waiting until the transport vehicle that needs to be removed returns, thereby speeding up feeding.

In an embodiment, as shown in FIG. 2, the first transport vehicle 21, the second transport vehicle 22, and the third transport vehicle 23 have the same carrying capacity. The first docking position, the second docking position, and the third docking position are disposed on a same side of the transmission assembly 4. The third docking position is disposed between the first docking position and the second docking position in a transmission direction of the transmission assembly 4. The material pick-up position A is disposed above the third docking position.

The carrying capacity of the first transport vehicle 21, the second transport vehicle 22, and the third transport vehicle 23 refers to a total number of material carrying trays that can be carried by the transport vehicle. The material pick-up position A being above the third docking position means that in a height direction of the feeding system, a height of a position of the material pick-up position A is higher than a height of a highest position of a space where the third docking position is located. In a transmission direction of the transmission assembly 4, a distance between a center of the third docking position and a center of the first docking position is a first distance, and a distance between the center of the third docking position and a center of the second docking position is a second distance. The first distance may be the same as or different from the second distance.

With the foregoing solution, by disposing the first docking position, the second docking position, and the third docking position on the same side of the transmission assembly 4, interference between a process of the transmission assembly 4 bringing raw materials away from the material placement position B and a process of the driving assembly and the manipulator 2 transferring raw materials can be avoided. Moreover, in the transmission direction of the transmission assembly 4, by disposing the third docking position between the first docking position and the second docking position and disposing the material pick-up position A above the third docking position, a difference between movement paths for the driving assembly transferring the first raw materials and the second raw materials can be minimized. This reduces a stroke of the driving assembly for transferring the first raw materials or the second raw materials, thereby speeding up feeding.

In an embodiment, referring to FIG. 2 and FIG. 3, the driving assembly further includes a first lifting mechanism 31, a second lifting mechanism 32, and a third lifting mechanism 33. The first lifting mechanism 31 is disposed as corresponding to the first docking position, and is configured to lift the first material carrying trays carrying the first raw materials on the first transport vehicle 21 one by one to a first preset position and place the second empty trays at the first preset position one by one onto the empty first transport vehicle 21. The second lifting mechanism 32 is disposed as corresponding to the second docking position, and configured to lift the second material carrying trays carrying the second raw materials on the second transport vehicle 22 one by one to a second preset position and place the third empty trays at the second preset position one by one onto the empty second transport vehicle 22. The material pick-up position A is disposed between the first preset position and the second preset position in the transmission direction of the transmission assembly 4. The third lifting mechanism 33 is disposed as corresponding to the third docking position, and configured to lift the third material carrying trays carrying the third raw materials on the third transport vehicle 23 one by one to the material pick-up position A and place the first empty trays at the material pick-up position A one by one onto the empty third transport vehicle 23. The translation mechanism 5 is disposed above the first docking position, the second docking position, and the third docking position, and capable of moving to any one of the first preset position, the material pick-up position A, and the second preset position in the transmission direction of the transmission assembly 4. The translation mechanism 5 is configured to move the first material carrying trays carrying the first raw materials at the first preset position to the material pick-up position A, move the second material carrying trays carrying the second raw materials at the second preset position to the material pick-up position A, move the second empty trays at the material pick-up position A to the first preset position, and move the third empty trays at the material pick-up position A to the second preset position.

The first lifting mechanism 31, the second lifting mechanism 32, and the third lifting mechanism 33 are configured to lift a material carrying tray, to separate the material carrying tray from a corresponding transport vehicle and lift the material carrying tray to a preset position. Moreover, before and after the lifting mechanism lifts the material carrying tray, the material carrying tray is always located at a corresponding docking position, even though the height thereof changes. Taking the first lifting mechanism 31 as an example, the first lifting mechanism 31 can lift the first material carrying tray to the first preset position by lifting the first material carrying tray, to facilitate the translation mechanism 5 picking up the first material carrying tray to the material pick-up position A. After the first lifting mechanism 31 lifts the first material carrying tray, a height of the first material carrying tray in a height direction of the feeding mechanism changes, but the first material carrying tray is still located at the first docking position.

In an implementation, the first lifting mechanism 31, the second lifting mechanism 32, and the third lifting mechanism 33 may each include a lifting arm and a driving member. The lifting arm is connected to the driving member. The lifting arm can be inserted between a transport vehicle and a material carrying tray. The driving member can drive the lifting arm to move upward, to lift the material carrying tray to a preset position. The driving member can also drive the lifting arm to move downwards, to prepare for a next lift or place an empty tray carried thereon onto a corresponding transport vehicle.

Certainly, in some other implementations, the first lifting mechanism 31, the second lifting mechanism 32, and the third lifting mechanism 33 may each include a lifting jaw and a driving member. The lifting claw is connected to the driving member. The lifting jaw grasps a material carrying tray. The driving member drives the lifting jaw to move up and down to lift the material carrying tray to a preset position, or moves downward from a preset position to grasp the material carrying tray or place an empty tray onto a corresponding transport vehicle. The driving member may be a linear electric cylinder, a linear air cylinder, a linear oil cylinder, or the like.

In some embodiments, the translation mechanism 5 further moves an empty tray at the material pick-up position A to a preset position with an empty vehicle, and places the empty tray onto a corresponding lifting mechanism. The lifting mechanism falls to place the empty tray carried thereon onto the corresponding empty vehicle. For example, the translation mechanism 5 further moves the second empty tray to the first preset position. The first lifting mechanism 31 at the first preset position carries the second empty tray and starts to move downward, to place the second empty tray onto the first transport vehicle 21. The translation mechanism 5 may be a belt conveying mechanism, a roller conveying mechanism, a chain scraper conveying mechanism, or the like.

In some implementations, as shown in FIG. 2 or FIG. 3, the translation mechanism 5 may include a translation driving servo 51, a driving rod 52, and a clamping assembly 53. Moving in the transmission direction of the transmission assembly 4, the driving rod 52 is connected to the translation driving servo 51, thereby driving the driving rod 52 to move to any one of the first preset position, the material pick-up position A, and the second preset position. The clamping assembly 53 is disposed on the driving rod 52, and can move in synchronization with the driving rod 52. The clamping assembly 53 is configured to clamp the material carrying tray.

In a specific embodiment, the clamping assembly 53 includes a plurality of air cylinders. The plurality of air cylinders are disposed at intervals in a circumferential direction and configured to fix the material carrying tray. In an embodiment, there may be four air cylinders. The four air cylinders are disposed in pairs of opposite air cylinders, and connection lines of the pairs of opposite air cylinders intersect with each other, for example, the connection lines are perpendicular with each other. In some other implementations, the clamping assembly 53 may include a clamping jaw, to grasp the material carrying tray. Alternatively, the clamping assembly 53 may include an absorption member, to adsorb the material carrying tray.

In some specific implementations, with continued reference to FIG. 3, the feeding mechanism further includes a detection mechanism 6. The detection mechanism 6 is disposed on the clamping assembly 53, and is electrically connected to each of the clamping assembly 53 and the translation driving servo 51, to detect whether the material carrying tray is in position. The clamping assembly 53 clamps a material carrying tray in response to the detection mechanism 6 detecting that the material carrying tray is in position. The translation driving servo 51 drives the driving rod 52 to move to the material pick-up position A or drives the driving rod 52 to move to any one of the first docking position to the third docking position. There may be a plurality of detection mechanisms 6. The plurality of detection mechanisms 6 are disposed in pairs of opposite detection mechanisms. The clamping assembly 53 clamps a material carrying tray in response to the plurality of detection mechanisms 6 all detecting the material carrying tray. As such, cases in which a material carrying tray is insecurely clamped or the clamping assembly 53 fails to clamp a material carrying tray that are caused by the fact that the material carrying tray has not been completely in position while the clamping assembly 53 has started to clamp the material carrying tray can be reduced.

With the foregoing solution, the material carrying trays at a corresponding position can be lifted one by one to a preset positions using the lifting mechanism. Using the translation mechanism 5, the material carrying trays carrying raw materials at the preset position can be transferred to the material pick-up position A, and the empty trays at the material pick-up position A can be transferred to one of the preset positions. In addition, the empty trays can be placed onto an empty transport vehicle using the lifting mechanism at a corresponding position. As such, feeding of raw materials and removal of empty trays are implemented. Moreover, the translation mechanism 5 can move to any one of the first preset position, the material pick-up position A, and the second preset position, so that the translation mechanism 5 can transfer all the raw materials at any one of the positions to the material pick-up position A, and move the empty trays at the material pick-up position A to an empty vehicle at any position, thereby reducing the number of translation mechanisms 5.

In an embodiment, a battery production line is further provided. The battery production line includes a case-put-in system and the feeding system involved above. The case-put-in system is configured to put a cell into a case. The feeding system is configured to transmit the case to the case-put-in system. The cell is applicable to batteries. The batteries are used in energy storage power systems such as water power plants, fire power plants, wind power plants, and solar power plants, and are also widely used in electric transportation tools such as electric bicycles, electric motorcycles, and electric automobiles, as well as in military equipment, aerospace, and other fields.

The driving assembly of the foregoing battery production line can move back and forth between the material pick-up position A, the first docking position, the second docking position, and the third docking position. The driving assembly can reach all the docking positions, eliminating the need to configure one driving assembly to transfer raw materials and empty trays at each docking position, thereby reducing the number of assemblies. Moreover, with the method, the driving assembly is controlled to transfer the second empty trays at the material pick-up position A onto the first transport vehicle 21, so that empty trays can also be placed onto the first transport vehicle 21 configured to carry the raw materials. As such, when the third transport vehicle 23 is fully loaded with empty trays so that the third transport vehicle 23 needs to be replaced, the manipulator can continue to transfer the raw materials, without halting and waiting until replacement of the third transport vehicle 23 is completed, thereby speeding up feeding.

In conclusion, it should be noted that the foregoing embodiments are for description of the technical solutions of the present application only, rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. Especially, as long as no structural conflict is caused, various technical features mentioned in various embodiments may be combined freely. The present application is not limited to the specific embodiments disclosed herein, but includes all technical solutions falling within the scope of the claims.

## Claims

1. A feeding method, applied to an automatic feeding system, the feeding method comprising:
controlling a first transport vehicle to transport first material carrying trays carrying first raw materials to a first docking position;
controlling a second transport vehicle to transport second material carrying trays carrying second raw materials to a second docking position;
controlling a third transport vehicle to reach a third docking position, wherein the third transport vehicle is an empty vehicle;
controlling a driving assembly to transfer the first material carrying trays carrying the first raw materials on the first transport vehicle one by one to a material pick-up position until the first transport vehicle becomes an empty vehicle;
controlling a manipulator to transfer the first raw materials at the material pick-up position one by one from the first material carrying trays to a material placement position until the first material carrying trays become first empty trays;
controlling the driving assembly to transfer the first empty trays at the material pick-up position one by one onto the third transport vehicle until all the first material carrying trays on the first transport vehicle are transferred onto the third transport vehicle;
in response to the driving assembly transferring a last one of the first empty trays away from the material pick-up position, controlling the driving assembly to transfer the second material carrying trays carrying the second raw materials on the second transport vehicle one by one to the material pick-up position until the second transport vehicle becomes an empty vehicle;
controlling the manipulator to transfer the second raw materials at the material pick-up position one by one from the second material carrying trays to the material placement position until the second material carrying trays become second empty trays; and
controlling the driving assembly to transfer the second empty trays at the material pick-up position onto the first transport vehicle until all the second material carrying trays on the second transport vehicle are transferred onto the first transport vehicle.

2. The feeding method according to claim 1, wherein the method further comprises:
in response to all the first material carrying trays on the first transport vehicle being transferred onto the third transport vehicle, controlling the third transport vehicle to transport the first empty trays away from the third docking position, and to transport third material carrying trays carrying third raw materials to the third docking position before the driving assembly transfers a last one of the second empty trays away from the material pick-up position.

3. The feeding method according to claim 2, wherein the method further comprises:
in response to the driving assembly transferring the last second empty tray away from the material pick-up position, controlling the driving assembly to transfer the third material carrying trays carrying the third raw materials on the third transport vehicle one by one to the material pick-up position until the third transport vehicle becomes an empty vehicle;
controlling the manipulator to transfer the third raw materials at the material pick-up position one by one from the third material carrying trays to the material placement position until the third material carrying trays become third empty trays; and
controlling the driving assembly to transfer the third empty trays at the material pick-up position onto the second transport vehicle until all the third material carrying trays on the third transport vehicle are transferred onto the second transport vehicle.

4. The feeding method according to claim 3, wherein the method further comprises:
in response to all the second material carrying trays on the second transport vehicle being transferred onto the first transport vehicle, controlling the first transport vehicle to transport the second empty trays away from the first docking position, and to transport the first material carrying trays carrying the first raw materials to the first docking position again before the driving assembly transfers a last one of the third empty trays away from the material pick-up position.

5. The feeding method according to claim 4, wherein the method further comprises:
in response to the driving assembly transferring the last third empty tray away from the material pick-up position, controlling the driving assembly to transfer the first material carrying trays carrying the first raw materials on the first transport vehicle one by one to the material pick-up position until the first transport vehicle becomes an empty vehicle;
controlling the manipulator to transfer the first raw materials at the material pick-up position one by one from the first material carrying trays to the material placement position until the first material carrying trays become first empty trays;
controlling the driving assembly to transfer the first empty trays at the material pick-up position one by one onto the third transport vehicle until all the first material carrying trays on the first transport vehicle are transferred onto the third transport vehicle; and
in response to all the third material carrying trays on the third transport vehicle being transferred onto the second transport vehicle, controlling the second transport vehicle to transport the third empty trays away from the second docking position, and to transport the second material carrying trays carrying the second raw materials to the second docking position again before the driving assembly transfers a last one of the first empty trays away from the material pick-up position.

6. The feeding method according to any one of claims 1 to 5, wherein the step of controlling the second transport vehicle to transport the second material carrying trays carrying the second raw materials to the second docking position comprises:
controlling the second transport vehicle to reach the second docking position before the driving assembly transfers the last first empty tray away from the material pick-up position.

7. A feeding system, comprising:
a feeding apparatus comprising a driving assembly, a transmission assembly, and a manipulator, wherein the feeding apparatus has a first docking position, a second docking position, a third docking position, a material pick-up position, and a material placement position, and the transmission assembly passes through the material placement position and is configured to bring a raw material away from the material placement position;
a transport apparatus comprising a first transport vehicle, a second transport vehicle, and a third transport vehicle; and
a control circuit electrically connected to each of the feeding apparatus and the transport apparatus, wherein the control circuit is configured to control operation of the feeding system in accordance with the feeding method according to any one of claims 1 to 6.

8. The feeding system according to claim 7, wherein the first transport vehicle, the second transport vehicle, and the third transport vehicle have the same carrying capacity; the first docking position, the second docking position, and the third docking position are disposed on a same side of the transmission assembly, and the third docking position is disposed between the first docking position and the second docking position in a transmission direction of the transmission assembly; and the material pick-up position is disposed above the third docking position.

9. The feeding system according to claim 8, wherein the driving assembly comprises:
a first lifting mechanism, which is disposed as corresponding to the first docking position, and configured to lift the first material carrying trays carrying the first raw materials on the first transport vehicle one by one to a first preset position and place the second empty trays at the first preset position one by one onto the empty first transport vehicle;
a second lifting mechanism, which is disposed as corresponding to the second docking position, and configured to lift the second material carrying trays carrying the second raw materials on the second transport vehicle one by one to a second preset position and place the third empty trays at the second preset position one by one onto the empty second transport vehicle, wherein the material pick-up position is disposed between the first preset position and the second preset position in the transmission direction of the transmission assembly;
a third lifting mechanism, which is disposed as corresponding to the third docking position, and configured to lift the third material carrying trays carrying the third raw materials on the third transport vehicle one by one to the material pick-up position and place the first empty trays at the material pick-up position one by one onto the empty third transport vehicle; and
a translation mechanism, which is disposed above the first docking position, the second docking position, and the third docking position, and capable of moving to any one of the first preset position, the material pick-up position, and the second preset position in the transmission direction of the transmission assembly, wherein the translation mechanism is configured to move the first material carrying trays carrying the first raw materials at the first preset position to the material pick-up position, move the second material carrying trays carrying the second raw materials at the second preset position to the material pick-up position, move the second empty trays at the material pick-up position to the first preset position, and move the third empty trays at the material pick-up position to the second preset position.

10. A battery production line, comprising:
a case-put-in system configured to put a cell into a case; and
the feeding system according to any one of claims 7 to 9, which is configured to transmit the case to the case-put-in system.
